# EUROPEAN PATENT APPLICATION

(11) **EP 2 893 807 A1**
(43) Date of publication of application: **15.07.2015**
(21) Application number: 14460015.2
(22) Date of filing: 13.03.2014
(51) Int. Cl.: A01N 43/28, A01P 13/00

(54) **The use of the ionic salts containing chiral alkylimidazolium cation and tetrafluoroborate anion**

(30) Priority: 09.01.2014 PL 40680214
(71) Applicant: Akademia im. Jana Dlugosza w Czestochowie, 42-200 Czestochowa (PL)
(72) Inventor: Biczak, Robert, 42-200 Czestochowa (PL); Feder-Kubis, Joanna, 52-209 Wroclaw (PL); Pawlowska, Barbara, 42-120 Miedzno (PL)
(74) Representative: Brodowska, Iwona

(57) **Abstract**

The essence of the invention is the use of chiral ionic salts containing a menthoxymethylimidazolium cation and tetrafluoroborate anion as a means of herbicidal properties.

In the use according to the invention as ionic salts alkylimidazolium cation and tetrafluoroborate anion is used, preferably 3-[(1*R*,2*S*,5*R*-(-)-menthoxymethyl]-1-methylimidazolium tetrafluoroborate, 3-[(1*R*,2*S*,5*R*-(-)-menthoxymethyl]-1-propylimidazolium tetrafluoroborate, 1-hexyl-3-[(1*R*,2*S*,5*R*-(-)-menthoxymethyl]imidazolium tetrafluoroborate, 3-[(1*R*,2*S*,5*R*-(-)-menthoxymethyl]-1-octylimidazolium tetrafluoroborate, 3-[(1*R*,2*S*,5*R*-(-)-menthoxymethyl]-1-nonylimidazolium tetrafluoroborate, 1-decyl-3-[(1*R*,2*S*,5*R*-(-)-menthoxymethyl]imidazolium tetrafluoroborate, 3-[(1*R*,2*S*,5*R*-(-)-menthoxymethyl]-1-undecylimidazolium tetrafluoroborate.

## Description

The subject of the invention is the use of chiral ionic salts with alkylimidazolium cation and tetrafluoroborate anion as a means of herbicidal properties, represented by the formula [ImRCH₂OMenthol]⁺BF₄⁻, wherein Im represents an imidazole group and R is an alkyl group CₙH₂ₙ₊₁ (n = 1-12), having so far unexplored herbicidal properties.

From Polish patent No. PL 2036951 are known alkylimidazolium chiral ionic liquids, the production of which lies in the fact that 1-alkylimidazole is alkylated, preferably 1-methylimidazole, with chiral alkylating reagent: a derivative of alkyl ester of L-(+)-lactic acid obtained from alkyl ester of lactic acid, by exchange of the hydroxyl group to the appropriate leaving group, which does not cause racemization, preferably a tosyl group.

From another Polish patent No. PL B1 2141002 are known protonic imidazolium ionic liquids, containing component of the chiral cyclic alcohol and semifluorinated anion, showing significant antistatic properties.

In the worldwide literature are also described chiral ionic liquids containing (1*R*,2*S*,5*R*)-(-)-menthol^{3,4} component, belonging to the quaternary ammonium salts with antistatic applications.

It is known that the imidazolium salts have a variety of biological properties and can be used as bactericides, fungicides or algicides, and the activity of these compounds is mainly dependent on the length of the alkyl substituent and the type of the anion⁵⁻¹⁰.

It has surprisingly been found that chiral ionic salts, especially represented by the formula [ImRCH₂OMenthol]⁺BF₄⁻, wherein Im represents an imidazole group and R is an alkyl group CₙH₂ₙ₊₁ (n = 1-12), have so far unexplored herbicidal properties.

Salts, which are the object of patent application, have previously been known, and their physicochemical properties, like the antibacterial and fungicidal properties, have already been described^{4,11}. Chiral alkylimidazolium tetrafluoroborates are crystalline compounds, which melting points decrease with increasing of alkyl chain length. For example, 3-[(1*R*,2*S*,5*R*-(-)-menthoxymethyl]-1-methylimidazolium tetrafluoroborate has a melting point of 99-102°C, while melting point of 1-dodecyl-3-[(1*R*,2*S*,5*R*-(-)-menthoxymethyl]imidazolium tetrafluoroborate is only 40-42°C.

The content of surfactant of all tetrafluoroborates of homologous series is in the range from 96,5-99,9%. Specific rotation was done in ethanol at 20°C and it changes with increasing of alkyl chain length. For example, rotation of 3-[(1*R*,2*S*,5*R-*(-)-menthoxymethyl]-1-propylimidazolium tetrafluoroborate is -86.9°C, while 3-[(1*R*,2*S*,5*R*-(-)-menthoxymethyl]-1-undecylimidazolium tetrafluoroborate -65.3°C.

The essence of the invention is the use of chiral ionic salts containing alkylimidazolium cation simultaneously with tetrafluoroborate anion, represented by the formula [ImRCH₂OMenthol]⁺BF₄⁻, wherein Im represents an imidazole group and R is an alkyl group CₙH₂ₙ₊₁ (n = 1-12), as a means of herbicidal properties.

In the use according to the invention as chiral ionic salts with alkylimidazolium cation and tetrafluoroborate anion is used, preferably 3-[(1*R*,2*S*,5*R*-(-)-menthoxymethyl]-1-methylimidazolium tetrafluoroborate (formula 1), 3-[(1*R*,2*S*,5*R-*(-)-menthoxymethyl]-1-propylimidazolium tetrafluoroborate (formula 2), 1-hexyl-3-[(1*R*,2*S*,5*R*-(-)-menthoxymethyl]imidazolium tetrafluoroborate (formula 3), 3-[(1*R*,2*S*,5*R*-(-)-menthoxymethyl]-1-octylimidazolium tetrafluoroborate (formula 4), 3-[(1*R*,2*S*,5*R*-(-)-menthoxymethyl]-1-nonylimidazolium tetrafluoroborate (formula 5), 1-decyl-3-[(1*R*,2*S*,5*R*-(-)-menthoxymethyl]imidazolium tetrafluoroborate (formula 6), 3-[(1*R*,2*S*,5*R*-(-)-menthoxymethyl]-1-undecylimidazolium tetrafluoroborate (formula 7).

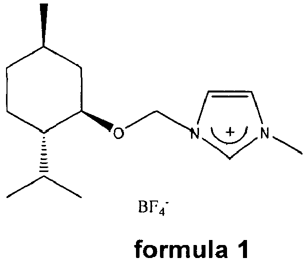

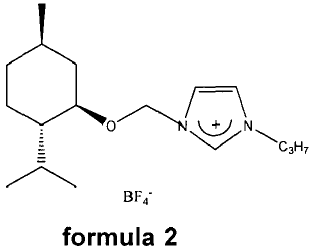

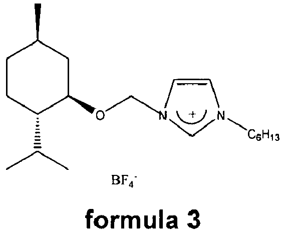

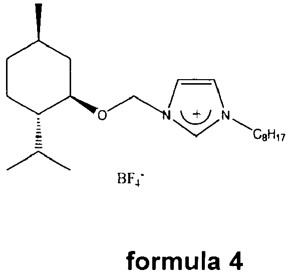

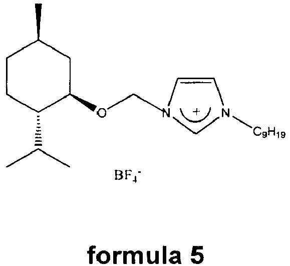

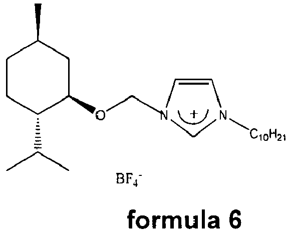

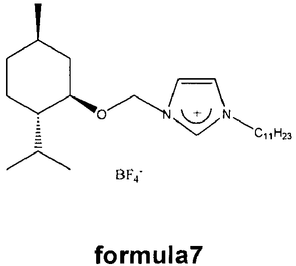

Said salts were used according to the invention in relation to weeds, which are popular in Poland, such as gallant-soldier (*Galinsoga parviflora* Cav.), Lambsquarters, lambsquarters (*Chenopodium album* L.) and sorrel (*Rumex acetosa* L.). Plants were grown from seeds, which were seeded in plastic pots with a diameter of 90 mm, containing 250 g of soil - light loamy sand. After 3 weeks after sunrises of plants, weeds were sprayed with solutions of ionic salts with alkylimidazolium cation and tetrafluoroborate anion.

By using the present invention - technology effects were obtained and was developed methodology of spray solutions preparation containing different concentrations of the biologically active substances, allowing for the selective, or a total eradication of undesirable plants, as well as economic effects associated with relatively low production cost of the alkylimidazolium salts simultaneously with tetrafluoroborate anion, which makes obtained preparations competitive with existing commercial herbicidal preparations.

The following are exemplary applications of the present invention, salts containing alkylimidazolium cation simultaneously with tetrafluoroborate anion and their identified herbicidal properties. The following examples also show the method of preparing the salts for use, and their effects are illustrated.

### Example I

### Spray solutions with a concentration of 0.5%, 1.0% and 2.0%, comprising as active ingredient 3-[(1R,2S,5R-(-)-menthoxymethyl]-1-methylimidazolium tetrafluoroborate

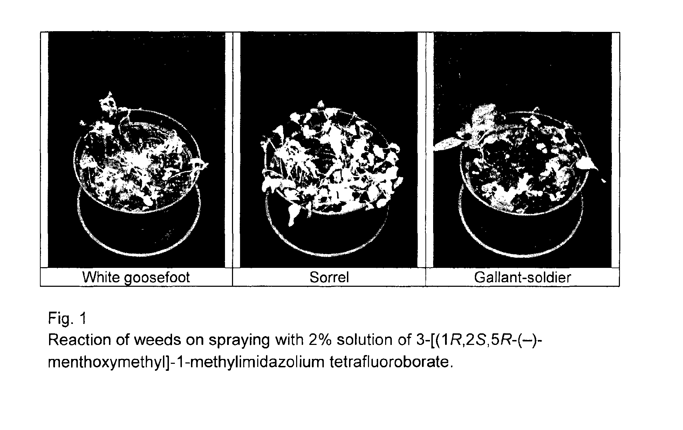

Spray solutions with a concentrations of 0.5%, 1.0% and 2.0% were obtained by dissolving respectively 50 mg, 100 mg and 200 mg of 3-[(1*R*,2*S*,5*R*-(-)-menthoxymethyl]-1-methylimidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. 3-[(1*R*,2*S*,5*R*-(-)-menthoxymethyl]-1-methylimidazolium tetrafluoroborate exhibits strong herbicidal activity in relation to the sorrel and lambsquarters and slightly weaker herbicidal activity against the gallant-soldier. For all the concentrations, changes on the leaves of examined plants were observed after 1-2 days after spraying. The higher the concentration of the salt is, the withering of plants occurs more quickly. The use of spray solution with a concentration of 0.5% leads to a drying of the lambsquarters plants and approximately half of the sorrel plants after about 10 days after procedure. Spraying of weeds with 1.0% solution of 3-[(1*R*,2*S*,5*R*-(-)-menthoxymethyl]-1-methylimidazolium tetrafluoroborate caused the total dry out of lambsquarters and sorrel plants, most of the gallant-soldier plants after about 10-12 days. When using a concentration of 2%, after about 8 days are drying out all the lambsquarters, sorrel and gallant-soldier plants (fig. 1).

### Example II

### Spray solutions with a concentration of 0.5%, 1.0% and 2.0%, comprising as active ingredient 3-[(1R,2S,5R-(-)-menthoxymethyl]-1-propylimidazolium tetrafluoroborate

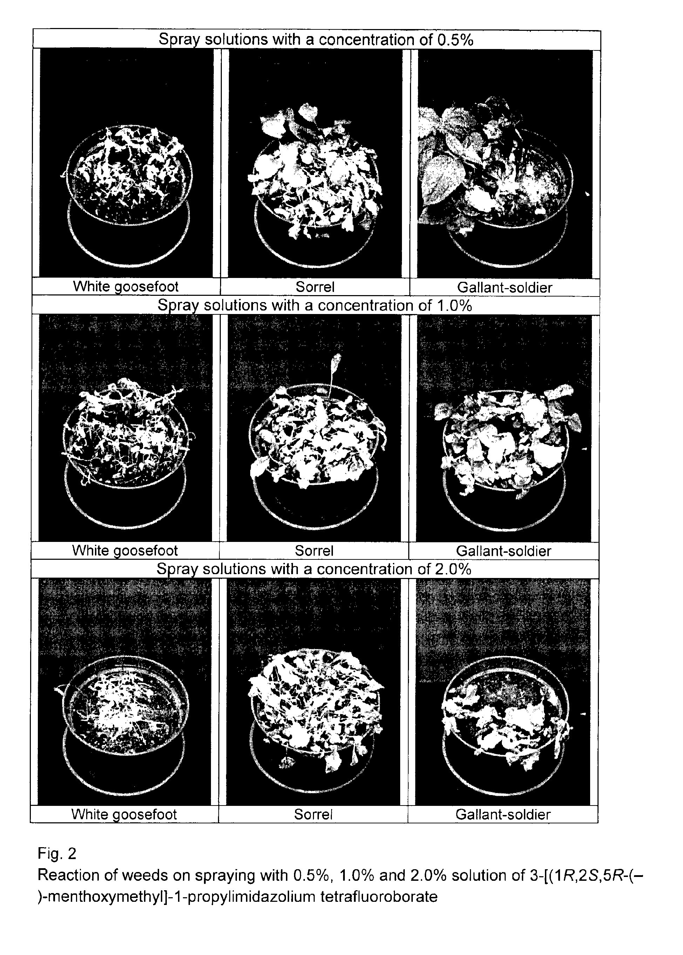

Spray solutions with a concentrations of 0.5%, 1.0% and 2.0% were obtained by dissolving respectively 50 mg, 100 mg and 200 mg of 3-[(1*R*,2*S*,5*R*-(-)-menthoxymethyl]-1-propylimidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. 3-[(1*R*,2*S*,5*R*-(-)-menthoxymethyl]-1-propylimidazolium tetrafluoroborate exhibits very strong herbicidal activity against all tested weeds, regardless of the concentration, which is illustrated by fig. 2, however the higher the concentration of the compound in the spray solution is, the observed changes on the plants are larger and the withering of weeds is faster. For a very strong herbicidal activity of 3-[(1*R*,2*S*,5*R*-(-)-menthoxymethyl]-1-propylimidazolium tetrafluoroborate indicates the fact that the spray solution with a concentration of 0.5% resulted in drying out the weed plants after about 6-8 days, whereas lambsquarters, sorrel and gallant-soldier plants completely dried out after about 4 days after application of the spray solutions of concentrations equal to 1.0% and 2.0%. The applied spray solution exhibits total herbicide properties.

### Example III

### Spray solutions with a concentration of 0.5%, 1.0% and 2.0% comprising as active ingredient 1-hexyl-3-[(1R,2S,5R-(-)-menthoxymethyl]imidazolium tetrafluoroborate

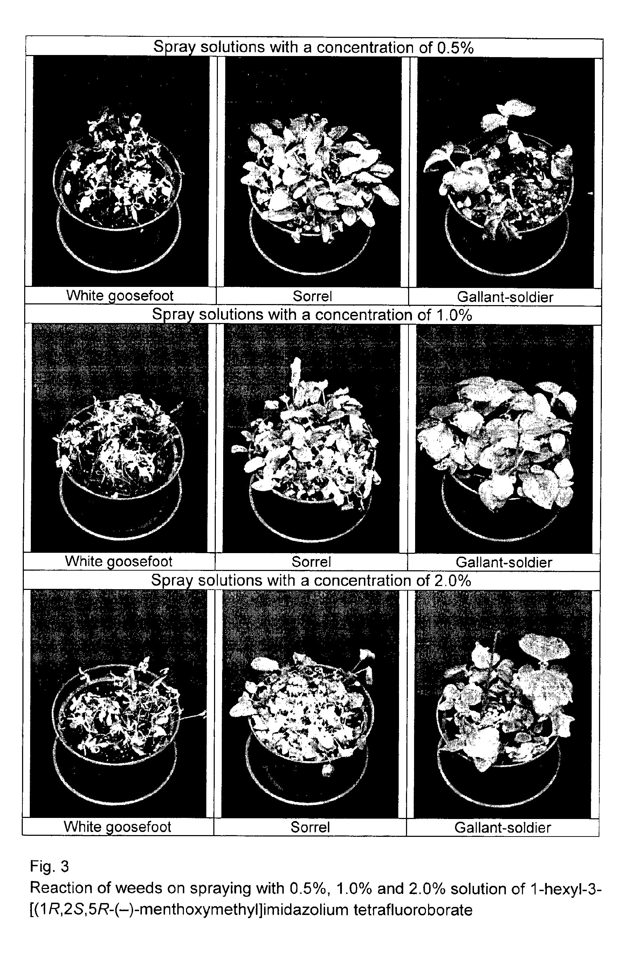

Spray solutions with a concentrations of 0.5%, 1.0% and 2.0% were obtained by dissolving respectively 50 mg, 100 mg and 200 mg of 1-hexyl-3-[(1*R*,2*S*,5*R*-(-)-menthoxymethyl]imidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. 1-hexyl-3-[(1*R*,2*S*,5*R*-(-)-menthoxymethyl]imidazolium tetrafluoroborate exhibits herbicidal activity (fig. 3). The strongest herbicidal activity of 1-hexyl-3-[(1*R*,2*S*,5*R*-(-)-menthoxymethyl]imidazolium tetrafluoroborate exhibits in relation to the weeds with anatomical and morphological structure similar to wormseed (fig. 3). At the lowest concentration of the spray solution - 0.5%, within about 6 days most plants wither, whereas at higher concentrations: 1.0% and 2.0% lambsquarters dries completely after only two days after spray application. The compound exhibits a slightly weaker herbicidal activity against sorrel, by applying the lowest concentration (0.5%), we observed only withering of leaf tips, at a compound concentration of 1% more than half of the plants wither after 4-6 days, whereas after the application of the highest concentration of the compound (2.0%) most plants wither after 1 day after spraying. 1-hexyl-3-[(1*R*,2*S*,5*R*-(-)-menthoxymethyl]imidazolium tetrafluoroborate the least devastate gallant-soldier, even with the highest concentration of the compound (2.0%) only about half of the plants withers, at lower concentrations of the substance (0.5% and 1.0%) withers only the leaf tips of weeds. The present description of the influence of spray solutions, containing 1-hexyl-3-[(1*R*,2*S*,5*R*-(-)-menthoxymethyl]imidazolium tetrafluoroborate at various concentrations shows selective herbicidal properties of the salt.

### Example IV

### Spray solutions with a concentration of 0.5%, 1.0% and 2.0%, comprising as active ingredient 3-[(1R,2S,5R-(-)-menthoxymethyl]-1-octylimidazolium tetrafluoroborate

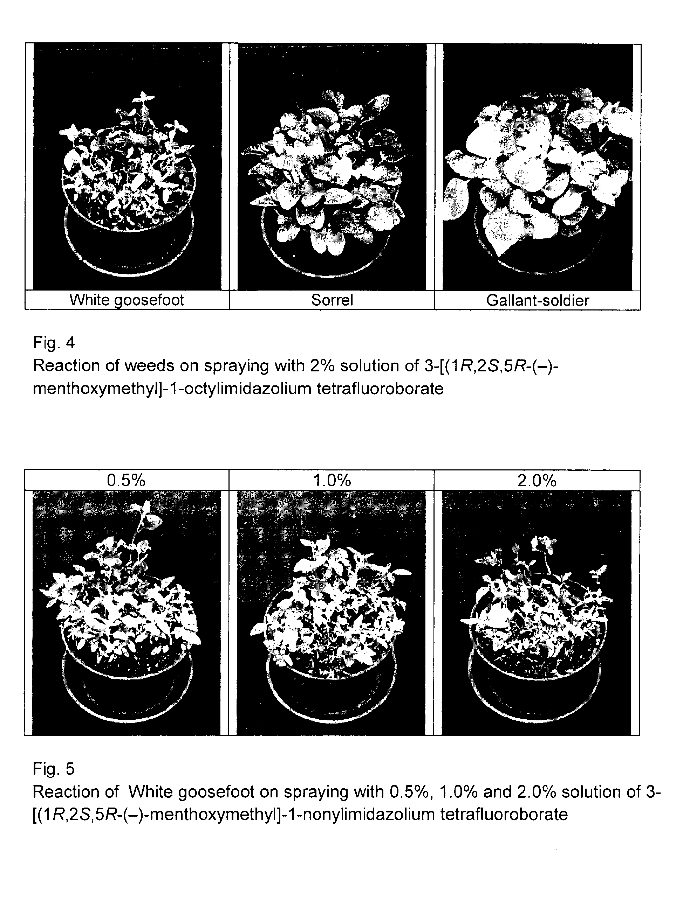

Spray solutions with a concentrations of 0.5%, 1.0% and 2.0% were obtained by dissolving respectively 50 mg, 100 mg and 200 mg of 3-[(1*R*,2*S*,5*R*-(-)-menthoxymethyl]-1-octylimidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. 3-[(1*R*,2*S*,5*R*-(-)-menthoxymethyl]-1-octylimidazolium tetrafluoroborate used at a concentration of 0.5% and 1.0% has practically no herbicidal properties of the tested weeds. Only the spray solution containing 2.0% of 3-[(1*R*,2*S*,5*R*-(-)-menthoxymethyl]-1-octylimidazolium tetrafluoroborate led to the formation of chlorotic and necrotic changes on the leaves of weeds (fig. 4).

### Example V

### Spray solutions with a concentration of 0.5%, 1.0% and 2.0%, comprising as active ingredient 3-[(1R,2S,5R-(-)-menthoxymethyl]-1-nonylimidazolium tetrafluoroborate

Spray solutions with a concentrations of 0.5%, 1.0% and 2.0% were obtained by dissolving respectively 50 mg, 100 mg and 200 mg of 3-[(1*R*,2*S*,5*R*-(-)-menthoxymethyl]-1-nonylimidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. 3-[(1*R*,2*S*,5*R*-(-)-menthoxymethyl]-1-nonylimidazolium tetrafluoroborate solutions, prepared according to the invention, show only slight herbicidal activity against lambsquarters plants (fig. 5). The sorrel and gallant-soldier were found to be resistant plants to the spray solutions, prepared in three concentrations according to the invention.

### Example VI

### Spray solutions with a concentration of 0.5%, 1.0% and 2.0%, comprising as active ingredient 1-decyl-3-[(1R,2S,5R-(-)-menthoxymethyl]imidazolium tetrafluoroborate

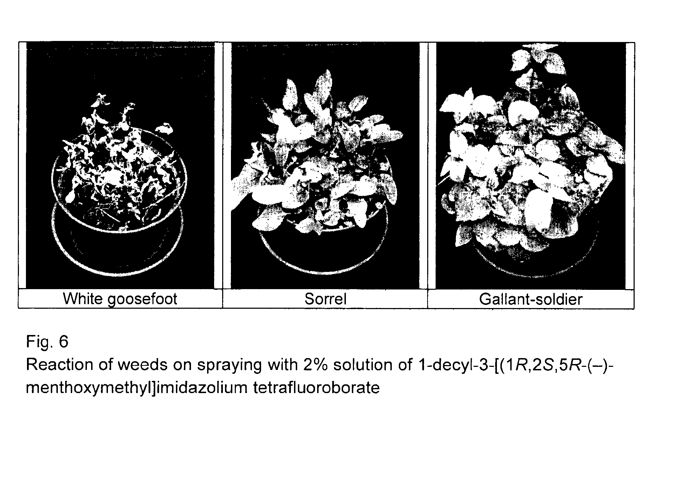

Spray solutions with a concentrations of 0.5%, 1.0% and 2.0% were obtained by dissolving respectively 50 mg, 100 mg and 200 mg of 1-decyl-3-[(1*R*,2*S*,5*R*-(-)-menthoxymethyl]imidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. 1-decyl-3-[(1*R*,2*S*,5*R*-(-)-menthoxymethyl]imidazolium tetrafluoroborate regardless of the concentration usedis a compound having a strong herbicidal effect in relation to the weeds with anatomical and morphological structure similar to lambsquarters. After application of the spray solution with a concentration of 0.5% lambsquarters plants wither after about 8 days, similar reactions of weeds can be observed after 6 days after application of a solution of 1.0%, and 1-decyl-3-[(1*R*,2*S*,5*R*-(-)-menthoxymethyl]imidazolium tetrafluoroborate used in a concentration of 2.0% led to a complete drying out of lambsquarters plants after 2-4 days after spraying. The use of the spray solution containing the active substance in a concentration of 2.0% also allows for combating ordinary sorrel, while gallant-soldier plants showed a high resistance to discussed spray solution, which indicates of selectivity herbicide activity of tetrafluoroborate 1-decyl-3-[(1 *R*,2*S*,5*R*-(-)-menthoxymethyl]imidazolium tetrafluoroborate (fig. 6).

### Example VII

### Spray solutions with a concentration of 0.5%, 1.0% and 2.0%, comprising as active ingredient 3-[(1R,2S,5R-(-)-menthoxymethyl]-1-undecylimidazolium tetrafluoroborate

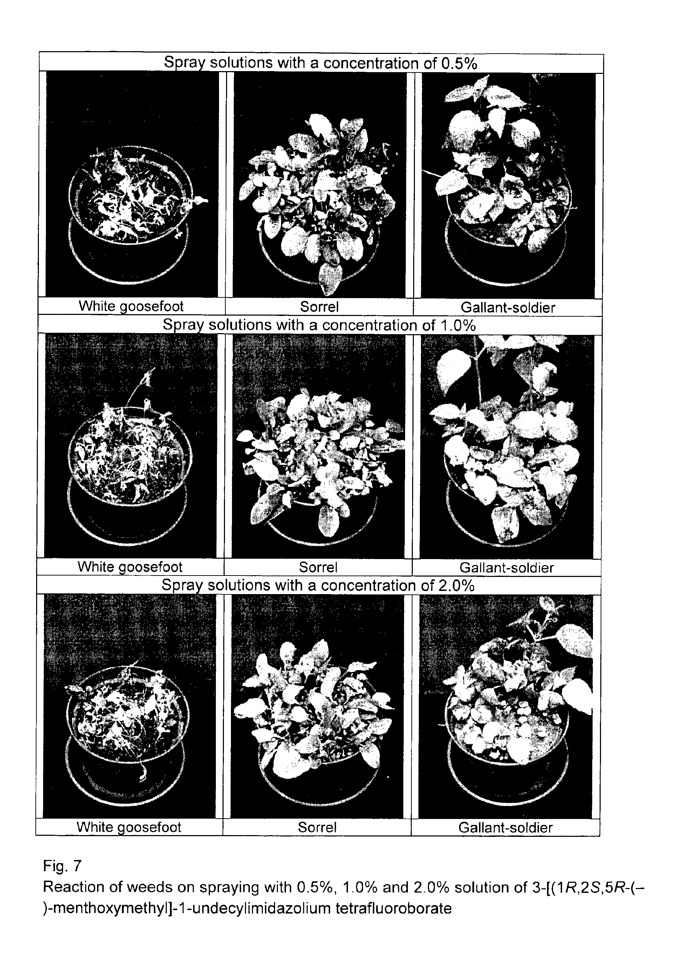

Spray solutions with a concentrations of 0.5%, 1.0% and 2.0% were obtained by dissolving respectively 50 mg, 100 mg and 200 mg of 3-[(1*R*,2*S*,5*R*-(-)-menthoxymethyl]-1-undecylimidazolium tetrafluoroborate in 4 cm³ of methanol, and the solution was refilled to 10 cm³ with distilled water. Thus obtained suspensions were sprayed on weeds (lambsquarters, sorrel and gallant-soldier) in an amount of 2cm³ of the suspension on each pot. The herbicidal properties of 3-[(1*R*,2*S*,5*R*-(-)-menthoxymethyl]-1-undecylimidazolium tetrafluoroborate demonstrate selective control of weeds (fig. 7), similar to the description in Example VI. 3-[(1*R*,2*S*,5*R*-(-)-menthoxymethyl]-1-undecylimidazolium tetrafluoroborate proved to be very effective herbicide in relation to the lambsquarters - at the lowest concentration of compound (0.5%) lambsquarters plants withers after 4 days, while with using concentrations of 1.0% and 2.0% lambsquarters wither after 2 days after spraying. This compound exhibits smaller herbicidal effect in relation to the sorrel, we observe directly proportional correlation between the concentration of the compound and the quantity of sorrel plants, which dried out after the application of spray solutions, containing the discussed active substance. The solutions of 3-[(1*R*,2*S*,5*R*-(-)-menthoxymethyl]-1-undecylimidazolium tetrafluoroborate, prepared according to the invention exhibit also slight herbicidal effect in relation to the gallant-soldier plants.

### Literature:

1. Kubisa P., Biedroń, T., PL 203695, 30.06.2004.
2. Feder-Kubis J., Soko 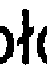 owski A., PL B1 21400, 18.08.2011.
3. Pernak J., Feder-Kubis J." Tetrahedron-Asymmetr., 17, 1728-1737 (2006).
4. J. Feder-Kubis, M. Kubicki, J. Pernak, Tetrahedron-Asymmetr., 21, 2709-2718 (2010).
5. Docherty K.M., Kulpa Ch.F., Grenn Chem., 2005, 7, 185-189.
6. Pernak J., Goc I., Mirska I., Green Chem., 2005, 6, 323-329.
7. Petkovic M., Ferguson J., Bohn A., Trindale J., Martins I., Carvalho M.B., Leitão M.C., Rodrigues C., Garcia H., Fereira R., Seddon K.R., Rebelo L.P.N., Silva Pereira C., Green Chem., 2009, 11, 889-894.
8. Cho Ch-W., Pham T.P.T., Jeon Y-Ch., Vijayaraghavan K., Choe W-S., Yun Y-S., Chemosphere, 2007, 69, 1003-1007
9. Borowiecki P., Milner-Krawczyk M., Plenkiewicz J., Beilstein J. Org. Chem., 2013, 9, 516-525.
10.Cho Ch-W., Pham T.P.T., Jeon Y-Ch., Yun Y-S., Grenn Chem., 2008, 10, 67-72
11.Pernak J., Feder-Kubis J., Cieniecka-Rostonkiewicz A., Fischmeister C., Griffin S., Rogers R., New J. Chem., 31, 879-892 (2007).

## Claims

1. The use of the chiral ionic salts containing alkylimidazolium cation and tetrafluoroborate anion, represented by the formula [ImRCH₂OMenthol]⁺BF₄⁻, wherein Im represents an imidazole group and R is an alkyl group CₙH₂ₙ₊₁ (n = 1-12), as a means of herbicidal properties

2. The use according to claim. 1, **characterized in that** as the optically active alkylimidazolium salts are used 3-[(1*R*,2*S*,5*R*-(-)-menthoxymethyl]-1-methylimidazolium tetrafluoroborate, 3-[(1*R*,2*S*,5*R*-(-)-menthoxymethyl]-1-propylimidazolium tetrafluoroborate, 1-hexyl-3-[(1*R*,2*S*,5*R*-(-)-menthoxymethyl]imidazolium tetrafluoroborate, 3-[(1*R*,2*S*,5*R*-(-)-menthoxymethyl]-1-octylimidazolium tetrafluoroborate, 3-[(1*R*,2*S*,5*R*-(-)-menthoxymethyl]-1-nonylimidazolium tetrafluoroborate, 1-decyl-3-[(1*R*,2*S*,5*R-*(-)-menthoxymethyl]imidazolium tetrafluoroborate, 3-[(1*R*,2*S*,5*R*-(-)-menthoxymethyl]-1-undecylimidazolium tetrafluoroborate.

3. The use according to claim. 1, **characterized in that** the alkylimidazolium tetrafluoroborates are used as spray solutions with concentrations of 0.5%, 1.0% and 2.0% of biologically active substances, preferably obtained from alkylimidazolium salt by dissolving this salt in a small amount of methanol, then adding water, and spraying of weeds to eradicate selectively or totally unwanted plants.
